# EUROPÄISCHE PATENTANMELDUNG

(11) **EP 2 575 034 A1**
(43) Veröffentlichungstag der Anmeldung: **03.04.2013**
(21) Anmeldenummer: 11183481.8
(22) Anmeldetag: 30.09.2011
(51) Int. Cl.: G06F 9/44

(54) **Verfahren für einen Identitätsnachweis zwischen einer Mehrzahl von in einer Baumstruktur organisierten Instanzobjekten und zumindest einem Typobjekt**

(71) Anmelder: Siemens Aktiengesellschaft, 80333 München (DE)
(72) Erfinder: Pohlan, Rudolf, 76337 Waldbronn (DE)

(57) **Zusammenfassung**

Die Erfindung betrifft ein Verfahren für einen Identitätsnachweis zwischen einer Mehrzahl von in einer Baumstruktur organisierten Instanzobjekten (30) einer Automatisierungslösung (16) einerseits und zumindest einem Typobjekt (28) andererseits mit folgenden Schritten: in den Instanzobjekten (30) der Automatisierungslösung (16) wird ein den Umfang des Vergleichs festlegendes Wurzelobjekt (36) ausgewählt, nach Auswahl des Wurzelobjekts (36) wird automatisch ein zu dem Wurzelobjekt (36) gehörender Instanzbaum (40) erzeugt, der Instanzbaum (40) wird traversiert und dabei jedes davon umfasste Instanzobjekt (30) mit dem oder jedem Typobjekt (28) verglichen sowie jedes Instanzobjekt (30) mit seinem als zugehörig erkannten Typobjekt (28) zu einem neuen, kombinierten Instanzobjekt (30) verschmolzen und bei einer abschließenden Darstellung des Instanzbaums (40) mit zumindest einem kombinierten Instanzobjekt (30) erfolgt mittels einer Anzeigeeinheit (32) eine Darstellung der Instanzobjekte (30) entsprechend der Vergleichsergebnisse.

## Beschreibung

Die Erfindung betrifft ein Verfahren für einen im Folgenden als Identitätsnachweis bezeichneten speziellen Vergleich zwischen Datenobjekten. Aus der DE 101 44 390 A1 ist ein Verfahren zur Visualisierung eines Vergleichsergebnisses mindestens zweier in Verzeichnisbäumen organisierter Datenstrukturen auf einer grafischen Anzeigeeinheit bekannt, wobei die Verzeichnisbäume durch eine gleichartige hierarchische Anordnung von Dateien und/oder Ordnern gebildet sind. Die Vergleichsmöglichkeit ist dabei nicht auf Dateien oder Ordner beschränkt, sondern gilt auch für andere Objekte in beliebigen Formaten der Datenverarbeitung, nämlich Datenbanken, Programmiersprachen, usw.

Der bekannte Ansatz eignet sich bei Problemstellungen, bei denen der Inhalt mindestens zweier Verzeichnisbäume miteinander zu vergleichen und das Vergleichsergebnis in geeigneter Weise anzuzeigen ist.

In der Automatisierungstechnik werden für die Programmierung dort eingesetzter Automatisierungsgeräte und der Beschreibung der Konfiguration der zu automatisierenden industriellen Anlage (zusammen im Folgenden als Automatisierungslösung bezeichnet) auch vorgefertigte, softwaretechnische Module eingesetzt. Beispielhaft können für diese softwaretechnischen Module Funktionsbausteine genannt werden. Dabei handelt es sich bekanntlich um eine Kombination einer Softwarefunktionalität, z. B. einer Reglerfunktionalität, mit so genannten lokalen Daten, mit denen die jeweilige Funktionalität arbeitet. Allerdings kommen als softwaretechnische Module auch ganze Automatisierungspläne sowie Vorlagen für die Beschreibungen von Einzelsteuereinheiten sowie Beschreibungen für eine Teilanlage usw. in Betracht.

Abstrakt betrachtet handelt es sich bei diesen softwaretechnischen Modulen zunächst um so genannte Typen (engl. types) oder Kopiervorlagen (engl. templates), die in einem softwaretechnischen Projekt, also einer die Automatisierungslösung auf einer oberen Ebene darstellenden Datenbank, durch eine so genannte Instanziierung einfach oder mehrfach und an verschiedenen Stellen zur Anwendung kommen. Zu einem Typ oder einem Template können also in einer Automatisierungslösung verschiedene Verwendungsstellen existieren, die in der Terminologie der Automatisierungstechnik als Instanz des Typs bzw. des Templates bezeichnet werden.

Sowohl an den Instanzen wie auch an den zugrunde liegenden Typen oder Templates selbst können Änderungen vorgenommen werden. Ist dies der Fall, ist eine strukturelle Identität zwischen Typ oder Template einerseits und deren Instanzen nicht in jedem Fall garantiert. Allerdings ist gerade bei validierungspflichtigen Anlagen ein Nachweis genau dieser Identität zwischen Typ/Template und deren Instanzen besonders erwünscht.

Eine Aufgabe der vorliegenden Erfindung besteht entsprechend darin, ein Verfahren anzugeben, das die vorhandene oder fehlende Identität nachweist und das Ergebnis anschaulich dokumentiert.

Obwohl das der oben skizzierten Aufgabe zugrunde liegende Problem von großem Interesse ist, wurde dieses Thema bisher kaum beachtet. Wenn überhaupt, finden sich nur Verfahren, die eine Identitätsprüfung oder einen Vergleich zwischen zwei Objekten gleichen Typs erlauben, wie dies z. B. in der oben genannten DE 101 44 390 A1 der Fall ist. Vereinzelt bekannt sind in der Automatisierungstechnik Verfahren, die per Knopfdruck einen Abgleich zwischen Typen und Instanzen durchführen. Diese Verfahren zeigen aber etwaige strukturelle Unterschiede zwischen Typen und daraus hervorgehenden Instanzen nicht auf, sondern eliminieren sie nur. Aus Anwendersicht wäre aber gerade eine Darstellung der Unterschiede hilfreich, bevor die Abgleichfunktion genutzt wird.

Unabhängig davon ist bekannt, dass Compiler für Programmiersprachen in der Automatisierungstechnik entsprechende Fehlermeldungen generieren, wenn Instanzen, also z. B. Variable, Datenbausteine, usw., nicht ihrem jeweiligen Typ entsprechen oder nicht kompatibel sind.

Die oben genannte Aufgabe wird mit einem Verfahren für einen speziellen Vergleich zwischen Instanzobjekten einerseits und Typobjekten andererseits gelöst. Dazu sind bei einem Verfahren für einen Identitätsnachweis zwischen einer Mehrzahl von in einer Baumstruktur organisierten Instanzobjekten einer Automatisierungslösung einerseits und zumindest einem Typobjekt andererseits, wobei die Instanzobjekte mit dem oder jedem Typobjekt zur Auswertung von Struktur- und/oder Inhaltsunterschieden miteinander verglichen werden, die folgenden Schritte vorgesehen, wobei der Vergleich auf strukturelle Unterschiede oder Inhaltsunterschiede im Folgenden kurz auch als Vergleich auf eine strukturelle Identität bezeichnet wird. Das vorgeschlagene Verfahren umfasst einen ersten Schritt, mit dem in den Instanzobjekten der Automatisierungslösung ein den Umfang des Vergleichs festlegendes Wurzelobjekt ausgewählt wird. Dies geht von der Annahme aus, dass die Automatisierungslösung selbst in einer Baumstruktur organisiert ist und jede Auswahl eines Objekts in einer solchen Baumstruktur definiert einen von dem ausgewählten Objekt ausgehenden, so genannten Sub-Baum, so dass auf diese Weise die Automatisierungslösung insgesamt oder einzelne Aspekte der Automatisierungslösung für das Verfahren ausgewählt werden können. In einem nachfolgenden Schritt wird automatisch ein zu dem ausgewählten Wurzelobjekt gehörender Instanzbaum erzeugt. Der Instanzbaum umfasst damit alle Instanzobjekte der Automatisierungslösung, die in der Automatisierungslösung durch die Auswahl des Wurzelobjekts spezifiziert wurden, also das Wurzelobjekt selbst und alle unterlagerten Instanzobjekte. Nach Erzeugung des Instanzbaums kann dieser traversiert, also entsprechend der Baumstruktur abgearbeitet werden. Dabei wird jedes von dem Instanzbaum umfasste Instanzobjekt mit dem oder jedem Typobjekt verglichen und jedes Instanzobjekt wird mit seinem als zugehörig erkannten Typobjekt zu einem neuen, kombinierten Instanzobjekt datentechnisch verschmolzen. Das aus der Verschmelzung hervorgehende neue, kombinierte Instanzobjekt umfasst also Daten des zugrunde liegenden Instanzobjekts sowie Daten des als zugehörig erkannten Typobjekts oder Daten, mit denen die Unterschiede zwischen Instanz- und Typobjekt beschrieben werden, jedenfalls Daten, um einen Vergleich und eine Differenzbildung zwischen Instanz-und Typobjekt jederzeit durchführen zu können. In einem abschließenden Schritt erfolgt bei einer Darstellung des resultierenden Instanzbaums mit zumindest einem kombinierten Instanzobjekt eine Darstellung der Instanzobjekte entsprechend der Vergleichsergebnisse. Als Darstellung entsprechend der Vergleichsergebnisse ist dabei zumindest eine Darstellung zu verstehen, die als identisch mit einem zugrunde liegenden Typobjekt erkannte Instanzobjekte anders darstellt als Instanzobjekte, bei denen eine solche Identität nicht festgestellt werden konnte. Die Darstellungsarten können feingranular auf einen Umfang einer erkannten Identität abgestellt sein. Für einen Anwender des Verfahrens sind unmittelbar sämtliche relevanten Informationen hinsichtlich einer gegebenen oder evtl. auch nicht gegebenen oder nur teilweisen Identität einzelner oder mehrerer Instanzobjekte in dem von ihm ausgewählten Teil der Automatisierungslösung mit zugrunde liegenden oder zumindest ursprünglich zugrunde liegenden Typobjekten erkennbar. Die Darstellung kann in grundsätzlich an sich bekannter Art mittels einer Anzeigeeinheit, also z. B. einem Bildschirm oder dergleichen, erfolgen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer besonderen Ausführungsform des Verfahrens ist bei einem Vergleich eines Instanzobjekts mit einem Typobjekt zum Identitätsnachweis eine Prüfung auf strukturelle Identität vorgesehen. Eine Überprüfung auf strukturelle Identität meint z. B., dass ein Instanzobjekt und ein zugrunde liegendes Typobjekt noch als identisch - strukturell identisch - ausgewiesen werden, auch wenn z. B. bei dem Instanzobjekt die Bezeichnung einer Variable geändert wurde, sofern deren Typ unverändert ist. Dies trägt der Tatsache Rechnung, dass die Bezeichnung einzelner Variablen nur der Übersichtlichkeit und der besseren Verständlichkeit des Programmtextes dient, in dem solche Variablen verwendet werden, während die Art der Bezeichnung unerheblich ist. Als Beispiel mag eine Reglerfunktionalität herhalten, bei der für den Proportionalanteil z. B. eine Variable mit der Bezeichnung "p_anteil" vorgesehen ist. Ein zu einem Typobjekt mit einer solchen Variablenbezeichnung erzeugtes Instanzobjekt ist mit dem zugrunde liegenden Typobjekt auch dann noch strukturell identisch, wenn die Bezeichnung der Variablen geändert wurde und als Bezeichnung z. B. "p_ant" gewählt wurde. Der Vergleich auf strukturelle Identität gewährleistet, dass dem Anwender des Verfahrens nur relevante Unterschiede angezeigt werden.

Wenn bei dem Verfahren für einen Identitätsnachweis ein Vergleich mit mehreren Typobjekten erfolgen soll, bietet es sich an, mehrere Typobjekte in einem Typbaum, ggf. auch mehreren Typbäumen, zusammenzufassen.

Wenn bei dem Verfahren der automatisch generierte Instanzbaum ausgehend vom Wurzelobjekt einerseits alle unterlagerten Instanzobjekte der Automatisierungslösung und andererseits auch alle so genannten Vaterobjekte solcher Instanzobjekte umfasst, entspricht der automatisch generierte Instanzbaum und der auf dieser Basis als Ergebnis des Vergleichs resultierende Instanzbaum mit zumindest einem neuen, kombinierten Instanzobjekt einer Struktur, wie der Anwender des Verfahrens diese von der jeweiligen Automatisierungslösung kennt. Als Vaterobjekte von Instanzobjekten kommen z. B. Objekte in Betracht, welche die einzelnen Aspekte der Automatisierung systematisch, funktional und/oder räumlich gruppieren. Bei einer einfachen Automatisierungslösung ist evtl. kein dediziertes Vaterobjekt vorhanden oder ein Wurzelobjekt der Automatisierungslösung fungiert als Vaterobjekt. Bei komplexeren Automatisierungslösungen für z. B. mehrere Teilprozesse kann für jeden Teilprozess ein Vaterobjekt vorgesehen sein, dem dann jeweils einzelne dem Teilprozess zugeordnete Instanzobjekte untergeordnet sind.

Beim Vergleich des Instanzbaums mit dem Typbaum können vom Instanzbaum umfasste Vaterobjekte übergangen werden, da diese auf einer abstrakten Betrachtungsebene im Wesentlichen Gruppierungszwecken dienen und keinen funktionalen Einfluss haben, der einer Prüfung auf eine bestehende oder zumindest ausreichende Identität mit jeweiligen Ursprungsobjekten bedürfte.

Bei einer besonderen Ausführungsform des Verfahrens ist vorgesehen, dass eine Verschmelzung eines Instanzobjekts mit einem als zugehörig erkannten Typobjekt zu einem neuen Instanzobjekt Daten im Hinblick auf etwaige Unterschiede umfasst. Als derartige Daten kommen sämtliche Daten des jeweiligen Instanz- und Typobjekts in Betracht, denn damit umfasst das neue Instanzobjekt alle relevanten Daten und jedenfalls auch Daten im Hinblick auf etwaige Unterschiede. Die auf diese Weise für das neue Instanzobjekt vorgesehenen Daten können jedoch auch zusammengefasst werden, indem z. B. einzelne Daten des Typobjekts, die in dem Instanzobjekt noch identisch oder zumindest strukturell identisch vorhanden sind, nicht übernommen werden, so dass insoweit eine Auslassung einer Übernahme einzelner Daten die entsprechende Identität anzeigt und nur bei bestehenden Unterschieden Daten aus dem Typobjekt übernommen werden und die so übernommenen Daten jedenfalls Daten im Hinblick auf etwaige Unterschiede darstellen.

Bei einem Instanzobjekt, das ohne spätere Anpassungen identisch auf ein bestimmtes Typobjekt zurückgeht, ist es in diesem Sinne z. B. zur Verschmelzung des Instanzobjekts und des als zugehörig erkannten Typobjekts zu einem neuen, kombinierten Instanzobjekt nicht notwendig, die Daten des Typobjekts in das neue Instanzobjekt zu übernehmen. In welcher Art und Weise die Verschmelzung der Daten von Instanzobjekt und jeweiligem Typobjekt tatsächlich erfolgt, ist implementationsabhängig und kann sich nach den Anforderungen des Einzelfalls richten. Jedenfalls kann bei einer Identität oder zumindest einer teilweisen Identität zwischen Instanzobjekt und Datenobjekt eine solche Identität durch ein entsprechendes Datum angegeben werden, so dass eine doppelte Aufnahme der identischen Daten aus Instanzobjekt und Typobjekt nicht notwendig ist. Andere Beispiele zur Verschmelzung sind ebenfalls denkbar.

In dem abschließenden Schritt des Verfahrens mit der Darstellung des resultierenden Instanzbaums ist bei einer besonderen Ausführungsform vorgesehen, dass Instanzobjekte ohne zugehörige Typobjekte als solche verwaltet und gekennzeichnet werden, wobei für derartige Instanzobjekte ohne Typobjekte eine vorgebbare Darstellungsart vorgesehen ist, die sich von der Darstellung sonstiger Instanzobjekte unterscheidet. Aufgrund der speziellen Darstellung kann der Verwender des Verfahrens unmittelbar erkennen, für welche Instanzobjekte ein Identitätsnachweis nicht möglich war. Ähnlich kann auch vorgesehen sein, dass im Instanzbaum nicht verwendete Typobjekte als solche verwaltet und gekennzeichnet werden. Ebenso wie bei den Instanzobjekten ohne Typobjekt ist für Typobjekte ohne Instanzobjekt eine eindeutige grafische Darstellung vorgesehen, so dass der Verwender des Verfahrens erkennen kann, zu welchen Typobjekten sich keine Instanzobjekte im Instanzbaum finden. Dies ermöglicht eine effiziente Verwaltung der Typobjekte, nämlich eine Pflege einer Bibliothek oder einer sonstigen Datenbank, in der solche Typobjekte normalerweise zusammengefasst sind. Normalerweise ist es schwer, nicht oder nicht mehr benötigte Typobjekte zu identifizieren und der Umfang solcher Bibliotheken oder Datenbanken nimmt kontinuierlich zu. Wenn als Ergebnis des Vergleichs nicht benötigte Typobjekte identifiziert werden, ist dies ein Indiz für eine evtl. mögliche Entfernung solcher Typobjekte aus der jeweiligen Datenbank, um deren Umfang handhabbar zu halten.

Wenn ein nach dem Vergleich resultierender Instanzbaum mit zumindest einem kombinierten Instanzobjekt grafisch mittels der Anzeigeeinheit als datentechnischer Baum präsentiert wird, ist einerseits eine Darstellung des Instanzbaums in gleicher Art und Weise möglich, wie der Verwender des Verfahrens dies von der Darstellung der Automatisierungslösung oder einzelner Aspekte der Automatisierungslösung gewohnt ist. Andererseits kann die hierarchische Darstellung als datentechnischer Baum auch verwendet werden, um schnell von einem Unterschied zum nächsten zu navigieren, um auf diese Art und Weise die Bedeutung der erkannten Unterschiede schnell erfassen zu können. Schließlich ermöglicht die hierarchisch strukturierte Darstellung auch das Erkennen von systematischen Abweichungen, etwa wenn in einzelnen Zweigen eines solchen Instanzbaums keine Unterschiede oder keine relevanten Unterschiede festgestellt wurden, mithin also eine ausreichende Identität besteht und in anderen Zweigen eine solche Identität nicht festgestellt werden konnte.

Der Vorteil der Erfindung und ihrer Ausgestaltungen besteht damit insbesondere darin, dass der gemäß dem Verfahren gewonnene Instanzbaum mit den "verschmolzenen" Instanzobjekten anschaulich zeigt, welche Instanzobjekte mit ihrem zugrunde liegenden Typobjekt übereinstimmen und welche nicht. Die Identität und evtl. Unterschiede zwischen jeder Instanz und dem korrespondierenden Typ lassen sich auf einen Blick erfassen.

Die oben genannte Aufgabe wird auch mit einem Programmiergerät zum Erstellen oder Ändern einer Automatisierungslösung gelöst, das nach dem Verfahren wie hier und im Folgenden beschrieben arbeitet und dazu Mittel zur Durchführung des Verfahrens umfasst. Die Erfindung ist dabei in Software implementiert. Die Erfindung ist damit einerseits auch ein Computerprogramm mit durch einen Computer ausführbaren Programmcodeanweisungen und andererseits ein Speichermedium oder Computerprogrammprodukt mit einem derartigen Computerprogramm sowie schließlich auch ein Programmiergerät oder dergleichen, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: zur Veranschaulichung des Umfelds der Erfindung einen durch ein Automatisierungssystem gesteuerten techni- schen Prozess, wobei die Steuerung oder dergleichen auf Basis einer mit einem Programmiergerät erstellten Automatisierungslösung erfolgt,
- FIG 2: einen Objekt- oder Instanzbaum einer Automatisierungslösung mit davon umfassten Instanzobjekten und zumindest einzelnen Vaterobjekten, denen die Instanz-objekte untergeordnet sind, sowie Typobjekte, bei denen es sich um eine Grundlage für einzelne oder mehrere Instanzobjekte handeln kann,
- FIG 3: eine Darstellung eines Instanz- und eines Typobjekts mit weiteren Details,
- FIG 4: einen nach Auswahl eines Wurzelobjekts in einer Automatisierungslösung sich ergebenden Instanzbaum als Basis für den Identitätsvergleich und einen Typbaum sowie einen resultierenden Instanzbaum und
- FIG 5: ein schematisch vereinfachtes Flussdiagramm zum Ablauf des Verfahrens.

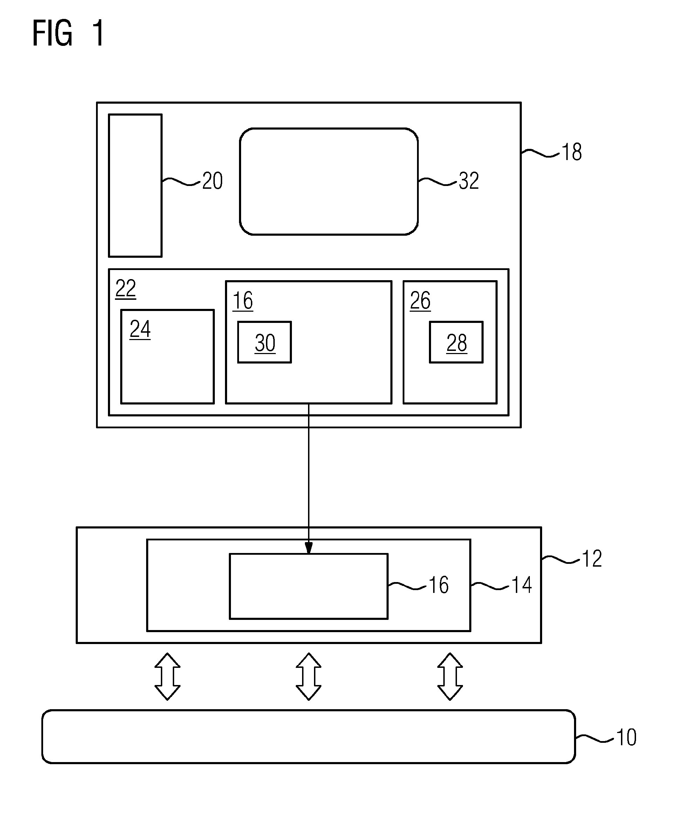

FIG 1 zeigt schematisch vereinfacht einen nicht näher dargestellten technischen Prozess 10, der in an sich bekannter Art und Weise durch ein ebenfalls nicht näher dargestelltes Automatisierungssystem 12 gesteuert und/oder überwacht wird. Das Automatisierungssystem 12 umfasst dafür mindestens ein Automatisierungsgerät 14 und dieses umfasst in an sich bekannter Art und Weise eine Verarbeitungseinheit in Form von oder nach Art eines Prozessors (nicht dargestellt) sowie einen Speicher (nicht dargestellt), in welchem ein als Automatisierungslösung 16 fungierendes Steuerungsprogramm vorgehalten und im Betrieb durch die Verarbeitungseinheit ausgeführt wird.

Die Automatisierungslösung 16 wird mit einem Programmiergerät 18 oder einem als Programmiergerät 18 fungierenden Computer oder dergleichen erstellt. Dafür umfasst das Programmiergerät 18 in an sich bekannter Art und Weise eine Verarbeitungseinheit 20 in Form von oder nach Art eines Mikroprozessors sowie einen Speicher 22. In den Speicher 22 ist ein als Entwicklungsumgebung 24 für die Erstellung von Automatisierungslösungen 16 fungierendes Computerprogramm geladen. Des Weiteren ist in den Speicher 22 eine Bibliothek 26 geladen oder das Programmiergerät 18 hat auf eine solche Bibliothek 26 in einem externen Speicher (nicht dargestellt) Zugriff. In der Bibliothek 26 ist zumindest ein Typobjekt 28, üblicherweise eine Mehrzahl von Typobjekten 28, abrufbar. Solche Typobjekte 28 sind zur Verwendung in einer Automatisierungslösung 16 vorgesehen. Die Automatisierungslösung 16 wird nämlich zumindest während der Dauer von deren Erstellung mittels des Programmiergeräts 18 im Speicher 22 des Programmiergeräts 18 vorgehalten und nach Abschluss der Erstellung zum Automatisierungssystem 12 übertragen.

Eine Verwendung eines Typobjekts 28 in einer Automatisierungslösung 16 bedeutet eine so genannte Instanziierung des jeweiligen Typobjekts 28 und das Resultat einer solchen Instanziierung ist ein Instanzobjekt 30. Üblicherweise umfasst eine Automatisierungslösung 16 eine Vielzahl von Instanzobjekten 30. Nachdem jedes Instanzobjekt 30 auf ein ursprünglich zugrunde liegendes Typobjekt 28 zurückgeht, ergibt sich eine wechselseitige Zugehörigkeit von Instanzobjekt 30 und Typobjekt 28, die auch dann noch erkennbar ist, wenn etwa Änderungen entweder am Typobjekt 28 oder am Instanzobjekt 30 erfolgt sind. Das Erkennen solcher Änderungen und/oder das zugrunde liegende Erkennen von Zusammengehörigkeiten von in einer Automatisierungslösung 16 verwendeten Instanzobjekten 30 und Typobjekten 28 ist Gegenstand der vorgelegten Beschreibung. Dazu wird ein Verfahren vorgeschlagen, das im Folgenden mit weiteren Details beschrieben wird.

Der hier und im Folgenden als Identitätsnachweis bezeichnete durchzuführende Vergleich von Instanzobjekten 30 und Typobjekten 28 wird mittels des Programmiergeräts 18 oder einem als Programmiergerät 18 fungierenden Gerät durchgeführt. Die Funktionalität des nachfolgend beschriebenen Verfahrens ist dafür in Software implementiert und Bestandteil des als Entwicklungsumgebung 24 fungierenden Computerprogramms. Zur Darstellung der Ergebnisse des Identitätsnachweises ist als Anzeigevorrichtung 32 z. B. ein Monitor des Programmiergeräts 18 vorgesehen. Grundsätzlich kommen auch andere Anzeigevorrichtungen 32, also z. B. ein Drucker oder dergleichen, in Betracht. Zur Bedienung des als Entwicklungsumgebung 24 fungierenden Computerprogramms ist mit dem Programmiergerät 18 in an sich bekannter Art und Weise zumindest eine Eingabeeinheit, also z. B. eine Tastatur oder dergleichen, verbunden.

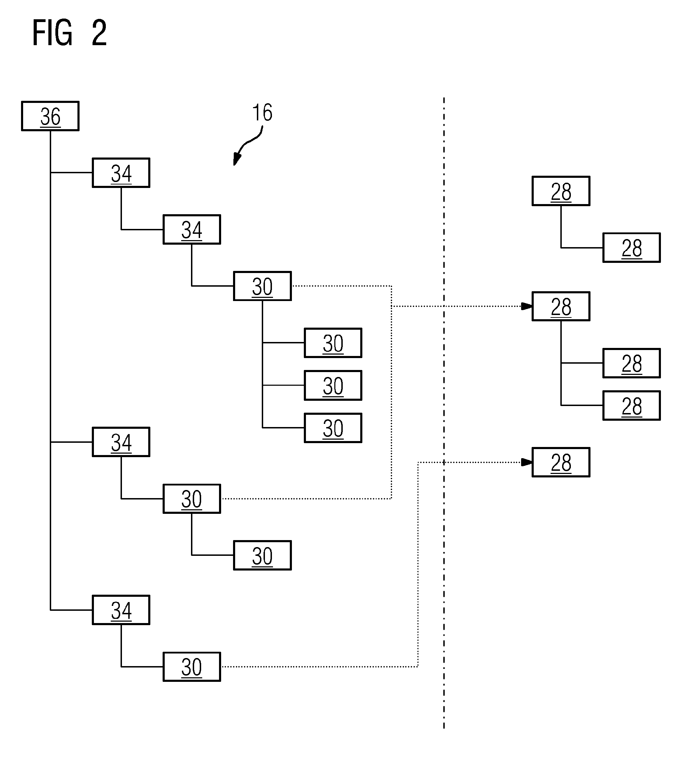

FIG 2 zeigt auf der linken Seite eine andere Darstellung der Automatisierungslösung 16, nämlich eine Darstellung der von der Automatisierungslösung 16 umfassten Instanzobjekte 30 in einem so genannten Objektbaum. In dem Objektbaum sind hierarchische Positionen der Instanzobjekte 30, also z. B. eine Zugehörigkeit zu einem speziellen Aspekt der Automatisierungslösung 16, abgebildet. Zur Gruppierung der Instanzobjekte 30 sind so genannte Vaterobjekte 34 vorgesehen und die Automatisierungslösung 16 geht insgesamt von einem Basisobjekt aus, das als Vaterobjekt für untergeordnete Vaterobjekte 34 und/oder Instanzobjekte 30 aufgefasst werden kann.

Ein Baum ist bekanntlich eine Bezeichnung für eine spezielle Datenstruktur und es ist üblich, denjenigen Knoten, dem alle anderen Knoten (Objekte) untergeordnet sind, als Wurzel zu bezeichnen. Entsprechend wird auch hier das oben genannte Basisobjekt als Wurzelobjekt 36 bezeichnet. Hinzuweisen ist noch darauf, dass aus einem Objektbaum durch Auswahl eines der davon umfassten Objekte ein neuer, kleinerer Objektbaum ausgewählt werden kann. Das dabei ausgewählte Objekt bildet das Wurzelobjekt 36 in einem solchen neuen Objektbaum. Diese Begrifflichkeit wird im Folgenden noch eine Rolle spielen.

Wie bereits anhand von FIG 1 erläutert, sind Instanzobjekte 30 das Ergebnis einer Instanziierung eines Typobjekts 28 und insoweit zeigt die Darstellung in FIG 2 auf der rechten Seite eine Darstellung solcher Typobjekte 28. Die zwischen einzelnen Instanzobjekten 30 und einzelnen Typobjekten 28 eingezeichneten Pfeile verdeutlichen, dass das jeweilige Instanzobjekt 30 auf das bezeichnete Typobjekt 28 zurückgeht. Beachtenswert ist dabei, dass es ohne weiteres mehrere auf das gleiche Typobjekt 28 zurückgehende Instanzobjekte 30 geben kann. Solche Zugehörigkeiten sind z. B. erkennbar, indem jedem Typobjekt 28 eine textuelle oder sonstige eindeutige Kennzeichnung zugewiesen ist, die beim Anlegen des jeweiligen Typobjekts 28 zwingend vergeben wird. Wenn zu einem Typobjekt 28 in einer Automatisierungslösung 16 ein Instanzobjekt 30 angelegt wird, ist für dieses Instanzobjekt 30 ebenfalls die Vergabe einer eindeutigen Bezeichnung erforderlich. Zusätzlich bleibt stets die Bezeichnung des Typobjekts 28, auf das das Instanzobjekt 30 zurückgeht, erhalten, indem die Bezeichnung des Typobjekts 28 als ein spezielles Datum des Instanzobjekts 30 übernommen wird oder indem die Bezeichnung des Typobjekts 28 Bestandteil der Bezeichnung des Instanzobjekts 30 wird, z. B. in Form einer Hinzufügung der Bezeichnung des Typobjekts 28. Für den vorgeschlagenen Identitätsnachweis werden also alle von dem dafür durchzuführenden Vergleich zu erfassenden Instanzobjekte 30 der Automatisierungslösung 16 mit allen oder einzelnen ausgewählten Typobjekten 28 verglichen und der Vergleich kann damit beginnen, dass für jedes Instanzobjekt 30 anhand der soeben beschriebenen Bezeichnung ein zugehöriges oder zumindest ursprünglich zugehöriges Typobjekt 28 gesucht wird.

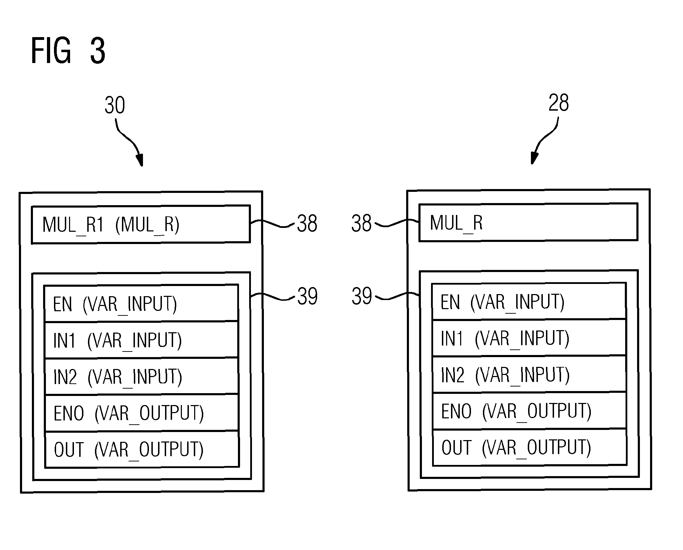

FIG 3 versucht das soeben Beschriebene auch noch grafisch zu veranschaulichen. In der Darstellung in FIG 3 ist auf der rechten Seite ein Typobjekt 28 gezeigt und auf der linken Seite ein auf dieses Typobjekt 28 zurückgehendes Instanzobjekt 30. Das Typobjekt 28 weist in der Darstellung in FIG 3 als Bezeichnung 38 den Text "MUL_R" auf. Das Instanzobjekt 30 führt diese Bezeichnung als Teil seiner eigenen Bezeichnung 38, nämlich als in runden Klammern an seine eigene Bezeichnung "MUL_R1" angefügt. Wenn also für ein Instanzobjekt 30 dieser oder ähnlicher Art ein Identitätsnachweis mit dem hier vorgeschlagenen Verfahren durchgeführt werden soll, kann anhand der so oder ähnlich gebildeten Bezeichnung 38 des Instanzobjekts 30 die Bezeichnung 38 des zugrunde liegenden Typobjekts 28 erkannt werden und mit dieser Bezeichnung 38 in den Typobjekten 28 das jeweils zugrunde liegende Typobjekt 28 gesucht werden. Sobald das einem Instanzobjekt 30 ursprünglich zugrunde liegende Typobjekt 28 auf diese Weise identifiziert wurde, kann für den eigentlichen Identitätsnachweis ein detaillierter Vergleich erfolgen. Dazu erfolgt zumindest ein Vergleich der so genannten Ein-/Ausgangsschnittstelle 39, die in FIG 3 für die Objekte, nämlich Typobjekte 28 und Instanzobjekte 30, ebenfalls dargestellt ist.

Bei der in FIG 3 gezeigten Situation ist unmittelbar erkennbar, dass die Ein-/Ausgangsschnittstellen 39 identisch sind. Bei einer solchen Konstellation wäre also der Identitätsnachweis unmittelbar erbracht. Der Identitätsnachweis muss sich jedoch nicht notwendig auf eine faktische Identität beziehen, sondern es reicht aus, wenn eine strukturelle Identität besteht. Eine strukturelle Identität besteht z. B. dann, wenn in der Ein-/Ausgangsschnittstelle 39 des Instanzobjekts 30 einzelne Eingangsvariable eine andere Bezeichnung erhalten, als dies bei dem zugrunde liegenden Typobjekt 28 ursprünglich vorgesehen war. Als Beispiel mag eine Änderung von "IN1" aus dem Typobjekt 28 in ,,IN_A" im Instanzobjekt 30 und eine korrespondierende Änderung von "IN2" in "IN_B" herhalten. Instanzobjekt 30 und Typobjekt 28 sind dann nicht mehr identisch, aber dennoch funktional identisch, denn die Bezeichnung einzelner Variablen hat auf die Funktionalität eines Instanzobjekts 30 keinen Einfluss. Etwas anderes ergibt sich allerdings, wenn in einem Instanzobjekt 30 die ursprüngliche Ein-/Ausgangsschnittstelle 39 verändert wurde, z. B. durch Hinzufügung einer weiteren Ausgangsvariablen, z. B. einer Ausgangsvariablen mit der Bezeichnung "OUT2". Bei einem solchen Instanzobjekt 30 kann immer noch die Zugehörigkeit zu dem ursprünglich zugrunde liegenden Typobjekt 28 erkannt werden. Wegen der geänderten Ein-/Ausgangsschnittstelle 39 besteht jedoch keine strukturelle Identität mehr.

Andere Beispiele für eine nicht mehr gegebene strukturelle Identität sind Änderungen der Typen speziell der zur Ein-/Ausgangsschnittstelle 39 gehörenden Variablen. Eine Eingangsvariable "IN1", die im zugrunde liegenden Typobjekt 28 z. B. vom Typ "real" für Fließkommawerte ist, ist nicht kompatibel mit einem später im Instanzobjekt geänderten Typ für diese Eingangsvariable in einen Typ für ganzzahlige Werte ("integer"). In diesem Zusammenhang ist erwähnenswert, dass der Umfang der Prüfung auf strukturelle Identität auch projektierbar, also bereits beim Anlegen eines Typobjekts 28 für das jeweilige Typobjekt 28, oder für jeden Vergleichslauf, z. B. durch Festlegung bestimmter Parameter für den jeweiligen Vergleichslauf, beeinflusst werden kann. Eine Variable vom Datentyp "integer" ist nämlich durchaus kompatibel mit einer Variablen vom Datentyp "real", weil der jeweilige ganzzahlige Wert auch als Fließkommazahl gespeichert werden kann (z. B. "12" und "12.0"). Umgekehrt ist dies nicht möglich, weil z. B. "12.7" nicht als ganzzahliger Wert ausgedrückt werden kann. Solche so genannten Typkompatibilitäten und Typinkompatibilitäten können bei der Prüfung auf strukturelle Identität in Betracht gezogen werden, derart, dass z. B. auch kompatible Typen noch als strukturell identisch ausgewertet werden.

Die Auswertung einer bestehenden oder nicht bestehenden strukturellen Identität kann auch noch weiter projektierbar beeinflusst werden, z. B. derart, dass in einem Typobjekt 28 einzelne von dessen Elementen beim Anlegen des Typobjekts 28 mit einer ggf. später änderbaren Kennzeichnung versehen werden, die beim Identitätsnachweis ausgewertet wird und wobei eine Kennzeichnung z. B. unterschiedliche Grade einer Übereinstimmung des Elements im Instanzobjekt 30 mit dem zugrunde liegenden Element im Typobjekt 28 fordern kann. Auf diese Weise können z. B. bereits im Typobjekt 28 angelegte Kommentare dahingehend ausgezeichnet werden, dass deren Übernahme im Instanzobjekt 30 oder eine evtl. Änderung oder Ergänzung solcher Kommentare im Instanzobjekt 30 keinen Einfluss auf die jeweils ermittelte strukturelle Identität haben soll. Ebenso kann für eine Gruppe von Elementen eine solche Kennzeichnung gesetzt werden und z. B. eine Ergänzung der Ein-/Ausgangsschnittstelle 39 in einem Instanzobjekt 30 erlauben, ohne dass dies bei der Ermittlung der strukturellen Identität ausgewertet wird. Andere und weitere Beispiele zur Projektierung des Umfangs des Identitätsvergleichs beim Anlegen oder bei der Pflege von Typobjekten 28 sind ebenfalls denkbar.

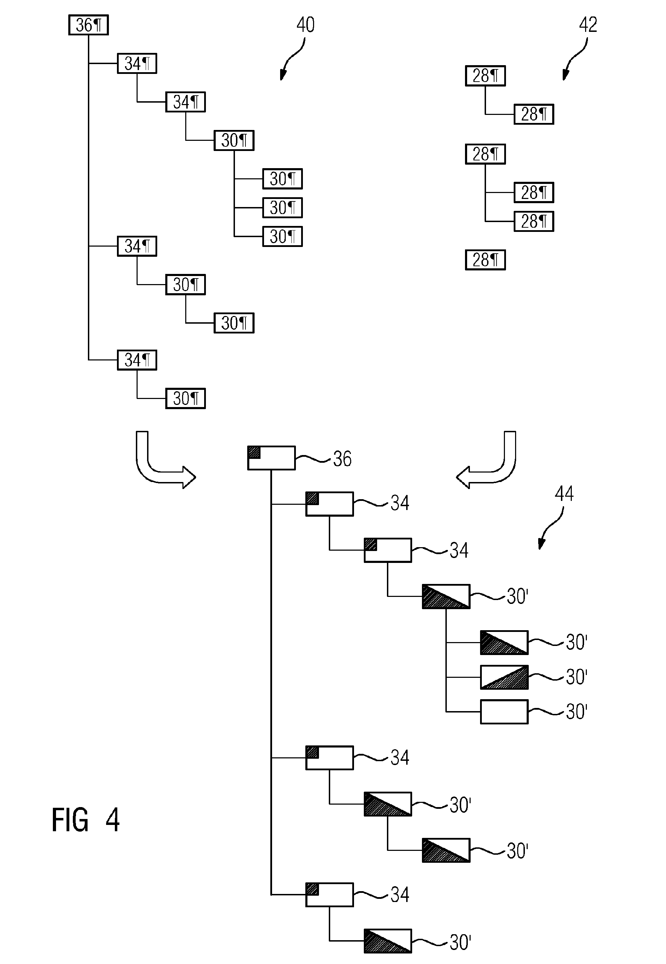

FIG 4 zeigt schließlich eine Möglichkeit einer grafischen Darstellung eines Ergebnisses des Identitätsnachweises. Der Vergleich geht aus von einem Instanzbaum 40 einerseits und einem Typbaum 42 andererseits. Der Instanzbaum 40 umfasst ausgehend von einem im Objektbaum der Automatisierungslösung 16 (FIG 2) selektierten Wurzelobjekt 36 alle untergelagerten Objekte der Automatisierungslösung 16, zumindest aber alle dem Wurzelobjekt 36 untergelagerten Instanzobjekte 30 und deren Vaterobjekte 34. Der Instanzbaum 40 kann aufgebaut werden, indem alle diese Objekte ab dem selektierten Wurzelobjekt 36 aus der Automatisierungslösung 16 eingelesen werden. Der Typbaum 42, der auch in Form eines verteilten Baums, also in Form mehrerer Bäume, vorliegen kann, ergibt sich, indem aus der Bibliothek 26 einzelne, mehrere oder alle Typobjekte 28 als Grundlage für den Vergleich für den Identitätsnachweis ausgewählt werden.

Für den Vergleich wird der Instanzbaum 40 traversiert, also alle davon umfassten Knoten, nämlich die jeweiligen Objekte 36, 34, 30, abgearbeitet werden, indem ein Vergleich wie bereits in Zusammenhang mit FIG 3 beschrieben durchgeführt wird. Der Vergleich bezieht sich dabei insbesondere auf eine Erkennung von jeweils zugrunde liegenden Typobjekten 28 und einen Vergleich der vom Instanzbaum 40 umfassten Instanzobjekte 30 mit dem jeweils als zugehörig erkannten Typobjekt 28.

Eine Möglichkeit zur Präsentation des Ergebnisses ist in FIG 4 im unteren Bereich dargestellt. Dort ist gezeigt, dass für die Darstellung der einzelnen Objekte 36, 34, 30 vorgegebene oder vorgebbare Symbole verwendet werden. Auf diese Weise sind z. B. Vaterobjekte 34 und das selbst ein Vaterobjekt 34 darstellende Wurzelobjekt 36 eindeutig von Instanzobjekten 30 unterscheidbar. Auch die für die Instanzobjekte 30 verwendeten Symbole unterscheiden sich in Abhängigkeit vom Ergebnis der beim Traversieren des Instanzbaums 40 durchgeführten Vergleiche. Ein Symbol mit einem links unten angeordneten ausgefüllten Dreieck kann z. B. ein Instanzobjekt 30 bezeichnen, das mit seinem zugrunde liegenden Typobjekt 28 identisch oder zumindest strukturell identisch ist. Ein Instanzobjekt 30 mit einem rechts unten angeordneten ausgefüllten Dreieck könnte dagegen ein Instanzobjekt 30 bezeichnen, bei dem eine solche Identität oder zumindest strukturelle Identität nicht gegeben ist und dementsprechend Unterschiede zwischen dem Instanzobjekt 30 und dem zugrunde liegenden Typobjekt 28 bestehen. Ein durch einen leeren Kasten dargestelltes Instanzobjekt 30 könnte in diesem Sinne ein Instanzobjekt 30 symbolisieren, zu dem in den vom Typbaum 42 umfassten Typobjekten 28 kein passendes, zugrunde liegendes Typobjekt 28 gefunden wurde. Für den umgekehrten Fall, dass also im Typbaum 42 zumindest ein Typobjekt 28 vorhanden ist, zu dem sich im Instanzbaum 40 kein darauf basierendes Instanzobjekt 30 findet, kann eine Einordnung eines entsprechenden Symbols, z. B. eines ausgefüllten Kastens, an geeigneter Stelle im resultierenden Instanzbaum 44 vorgesehen sein.

Die Objekte 36, 34, 30 im resultierenden Instanzbaum 44 im unteren Teil der Darstellung in FIG 4 sind zumindest hinsichtlich der Instanzobjekte 30 neue, kombinierte Instanzobjekte 30' und der resultierende Instanzbaum 44 ist ein neuer, kombinierter Instanzbaum 44, in dem zumindest diejenigen Instanzobjekte 30, zu denen im Typbaum 42 ein zugrunde liegendes Typobjekt 28 gefunden wurde, datentechnisch mit dem jeweils zugrunde liegenden Typobjekt 28 verschmolzen sind. Diese Verschmelzung kann darin bestehen, dass das neue, kombinierte Instanzobjekt 30' sowohl die Daten des ursprünglichen Instanzobjekts 30 wie auch die Daten des zugrunde liegenden Typobjekts 28 umfasst. Die Kombination kann auch im Hinblick auf eine Reduzierung des ansonsten erforderlichen Speicherplatzes darin bestehen, dass im Instanzobjekt 30 noch identisch vorhandene Elemente des zugrunde liegenden Typobjekts 28 nicht doppelt in das neue, kombinierte Instanzobjekt 30' übernommen werden, sondern nur etwaige Unterschiede. Hinsichtlich der Ausgestaltung einer solchen Verschmelzung oder Kombination von jeweils einem Instanzobjekt 30 und jeweils einem Typobjekt 28 sind unterschiedlichste Realisierungsformen denkbar, die der angesprochene Fachmann je nach Situation wählen kann. Außerdem ist nicht notwendig erforderlich, dass der resultierende Instanzbaum 44 tatsächlich als neue Datenstruktur angelegt wird, genauso kann sich der resultierende Instanzbaum direkt aus dem Instanzbaum 40 ergeben, indem aus dessen Instanzobjekten 30 durch Verschmelzung mit den jeweils als zugehörig erkannten Typobjekten 28 neue, kombinierte Instanzobjekte 30' entstehen.

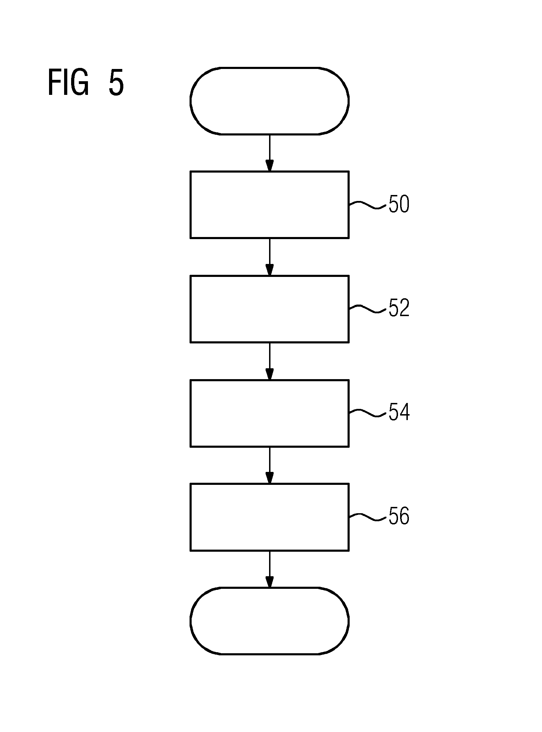

FIG 5 zeigt abschließend ein schematisch vereinfachtes Flussdiagramm zur Veranschaulichung des Ablaufs des hier vorgeschlagenen Verfahrens. In einem ersten Schritt 50 wird in der Automatisierungslösung 16 ein den Umfang des Vergleichs festlegendes Wurzelobjekt 36 ausgewählt. Nach Auswahl des Wurzelobjekts 36 wird in einem zweiten Schritt 52 automatisch ein zu dem Wurzelobjekt 36 gehörender Instanzbaum 40 (FIG 4, oben links) erzeugt. Bei der in FIG 4 veranschaulichten Ausführungsform werden ausgewählte Typobjekte 28 in einem Typbaum 42 organisiert (FIG 4, oben rechts). In einem dritten Schritt 54 wird der Instanzbaum 40 traversiert. Dabei wird jedes davon umfasste Instanzobjekt 30 mit dem oder jedem ausgewählten Typobjekt 28 verglichen. Wenn auf diese Weise ein zu dem betrachteten Instanzobjekt 30 gehöriges Typobjekt 28 gefunden wurde, wobei Zugehörigkeit bedeutet, dass das Instanzobjekt 30 auf Basis des jeweiligen Typobjekts 28 angelegt wurde, wird das Instanzobjekt 30 mit seinem als zugehörig erkannten Typobjekt 28 zu einem neuen, kombinierten Instanzobjekt 30' verschmolzen. In einem vierten Schritt 56 erfolgt sodann eine Darstellung des resultierenden Instanzbaums 44 (FIG 4, unten) mit zumindest einem kombinierten Instanzobjekt 30' z. B. auf einer Anzeigeeinheit 32 des Programmiergeräts 18 (FIG 1). Der Verwender des Verfahrens kann bei Betrachtung des resultierenden Instanzbaums 44 unmittelbar erkennen, bei welchen Instanzobjekten 30, 30' eine zumindest strukturelle Identität mit den jeweils zugrunde liegenden Typobjekten 28 besteht und bei welchen Instanzobjekten 30, 30' dies nicht der Fall ist. Dadurch, dass der Instanzbaum 40 auch alle Vaterobjekte 34 der Automatisierungslösung 16 umfasst, ist die resultierende Darstellung für den Verwender, der mit einer entsprechenden Darstellung der Automatisierungslösung 16 vertraut ist, unmittelbar interpretierbar.

Einzelne im Vordergrund stehende Aspekte der hier eingereichten Beschreibung lassen sich damit kurz wie folgt zusammenfassen: Die fortschreitende Standardisierung industrieller Automatisierungslösungen führt verstärkt zur Einführung von Typen, Templates und dergleichen (hier unter dem Begriff Typ zusammengefasst) auf allen Ebenen. Verfahren zur Prüfung auf Übereinstimmung von Instanz und zugrunde liegendem Typ, zugrunde liegendem Template, usw. gewinnen deshalb immer mehr an Bedeutung. Vorgeschlagen wird entsprechend ein Verfahren für einen Identitätsnachweis zwischen einer Mehrzahl von in einer Baumstruktur organisierten Instanzobjekten 30 einer Automatisierungslösung 16 einerseits und zumindest einem Typobjekt 28 andererseits, wobei die Instanzobjekte 30 mit dem oder jedem Typobjekt 28 zur Auswertung von Struktur-und/oder Inhaltsunterschieden miteinander verglichen werden, mit folgenden Schritten: In den Instanzobjekten 30 der Automatisierungslösung 16 wird ein den Umfang des Vergleichs festlegendes Wurzelobjekt 36 ausgewählt. Nach Auswahl des Wurzelobjekts 36 wird automatisch ein zu dem Wurzelobjekt 36 gehörender Instanzbaum 40 erzeugt. Der Instanzbaum 40 wird traversiert und dabei jedes davon umfasste Instanzobjekt 30 mit dem oder jedem Typobjekt 28 verglichen sowie jedes Instanzobjekt 30 mit seinem als zugehörig erkannten Typobjekt 28 zu einem neuen, kombinierten Instanzobjekt 30' verschmolzen. Bei einer Darstellung des Instanzbaums 40 mit zumindest einem kombinierten Instanzobjekt 30 erfolgt mittels einer Anzeigeeinheit 32 eine Darstellung der Instanzobjekte 30 entsprechend der Vergleichsergebnisse.

## Patentansprüche

1. Verfahren für einen Identitätsnachweis zwischen einer Mehrzahl von in einer Baumstruktur organisierten Instanzobjekten (30) einer Automatisierungslösung (16) einerseits und
zumindest einem Typobjekt (28) andererseits,
wobei die Instanzobjekte (30) mit dem oder jedem Typobjekt (28) zur Auswertung von Struktur- und/oder Inhaltsunterschieden miteinander verglichen werden,
mit folgenden Schritten:
in den Instanzobjekten (30) der Automatisierungslösung (16) wird ein den Umfang des Vergleichs festlegendes Wurzelobjekt (36) ausgewählt,
nach Auswahl des Wurzelobjekts (36) wird automatisch ein zu dem Wurzelobjekt (36) gehörender Instanzbaum (40) erzeugt,
der Instanzbaum (40) wird traversiert und dabei jedes davon umfasste Instanzobjekt (30) mit dem oder jedem Typobjekt (28) verglichen sowie jedes Instanzobjekt (30) mit seinem als zugehörig erkannten Typobjekt (28) zu einem neuen, kombinierten Instanzobjekt (30) verschmolzen,
bei einer Darstellung des Instanzbaums (40) mit zumindest einem kombinierten Instanzobjekt (30) erfolgt mittels einer Anzeigeeinheit (32) eine Darstellung der Instanzobjekte (30) entsprechend der Vergleichsergebnisse.

2. Verfahren nach Anspruch 1, wobei beim Vergleich eines Instanzobjekts (30) mit einem Typobjekt (28) eine strukturelle Identität geprüft wird.

3. Verfahren nach Anspruch 1 oder 2, wobei mehrere Typobjekte (28) für einen Vergleich mit Instanzobjekten (30) in einem Typbaum (42) organisiert werden.

4. Verfahren nach Anspruch 1, 2 oder 3, wobei der automatisch generierte Instanzbaum (40) ausgehend vom Wurzelobjekt (36) einerseits alle unterlagerten Instanzobjekte (30) der Automatisierungslösung (16) und andererseits auch alle Vaterobjekte (34) solcher Instanzobjekte (30) umfasst.

5. Verfahren nach Anspruch 3 und Anspruch 4, wobei beim Vergleich des Instanzbaums (40) mit dem Typbaum (42) von dem Instanzbaum (40) umfasste Vaterobjekte (34) übergangen werden.

6. Verfahren nach einem der vorangehenden Ansprüche, wobei eine Verschmelzung eines Instanzobjekts (30) mit einem als zugehörig erkannten Typobjekt (28) zu einem neuen Instanzobjekt (30) Daten im Hinblick auf etwaige Unterschiede umfasst.

7. Verfahren nach einem der vorangehenden Ansprüche, wobei Instanzobjekte (30) ohne zugehörige Typobjekte (28) als Instanzobjekt (30) ohne Typobjekt (28) verwaltet und gekennzeichnet werden.

8. Verfahren nach einem der vorangehenden Ansprüche, wobei in dem Instanzbaum (40) nicht verwendete Typobjekte (28) als Typobjekte (28) ohne Instanzobjekt (30) verwaltet und gekennzeichnet werden.

9. Verfahren nach einem der vorangehenden Ansprüche, wobei ein nach dem Vergleich resultierender Instanzbaum (40) mit zumindest einem kombinierten Instanzobjekt (30) grafisch mittels der Anzeigeeinheit (32) als datentechnischer Baum präsentiert wird.

10. Computerprogramm mit Programmcodemitteln, um alle Schritte von jedem beliebigen der Ansprüche 1 bis 9 durchzuführen, wenn das Computerprogramm auf einem Programmiergerät (18) zum Erstellen oder Ändern einer Automatisierungslösung (16) ausgeführt wird.

11. Computerprogrammprodukt mit Programmcodemitteln, die auf einem computerlesbaren Datenträger gespeichert sind, um das Verfahren nach jedem beliebigen der Ansprüche 1 bis 9 durchzuführen, wenn das Computerprogramm auf einem Programmiergerät (18) zum Erstellen oder Ändern einer Automatisierungslösung (16) ausgeführt wird.
